# EUROPEAN PATENT APPLICATION

(11) **EP 3 456 987 A1**
(43) Date of publication of application: **20.03.2019**
(21) Application number: 17796069.7
(22) Date of filing: 02.05.2017
(51) Int. Cl.: F16B 7/20, B21D 47/01, F16B 5/07

(54) **FRAME AND FRAME ASSEMBLING METHOD**

(30) Priority: 11.05.2016 JP 2016095602
(71) Applicant: Mitsubishi Electric Corporation, Chiyoda-ku Tokyo 100-8310 (JP)
(72) Inventor: HASHIZUME Kenichi, Tokyo 100-8310 (JP); TANIMOTO Masaki, Tokyo 100-8310 (JP)
(74) Representative: Studio Torta S.p.A.
(86) International application number: PCT/JP2017/017270
(87) International publication number: WO 2017/195708

(57) **Abstract**

A frame (1) includes a first member (10) having a side wall (11), and a second member (20) having side walls (21A, 21B). The first member (10) has first through-holes (12A, 12B). The side walls (21A, 21B) have slits (25A, 25B) inside which the first through-holes (12A, 12B) are unobstructed while the side wall (11) is received in the slits (25A, 25B), and locking portions that protrude and fit into the first through-holes (12A, 12B).

## Description

### Technical Field

The present disclosure relates to a frame and a frame assembling method.

### Background Art

A plurality of metal members are combined in a frame to form an H shape, a U shape, or an L shape.

For example, Patent Literature 1 discloses a frame in which a first member and a second member are combined, the first member forming a U-shaped cross-section and including two side plates and a bottom plate, the second member forming an L-shaped cross-section and including a side plate and a bottom plate. In the frame disclosed in Patent Literature 1, locking portions are formed at the bottom and the tip of the side plates of the first member respectively, and locking holes are formed in the side plate and the bottom plate of the second member, respectively. Then, the frame is assembled by the locking portions of the first member being inserted into the locking holes of the second member.

### Citation List

### Patent Literature

Patent Literature 1: International Publication No. WO2012/173087.

### Summary of Invention

### Technical Problem

In the frame described in Patent Literature 1, the locking portion of the first member is simply inserted into the locking hole of the second member. Therefore, the bonding strength between the first member and the second member is low, and the first member is easily detached from the second member.

The present disclosure is made to solve the above problem. An objective of the present disclosure is to provide a frame in which a first member is not easily detached from a second member.

### Solution to Problem

To achieve the above objective, a frame according to the present disclosure includes a first member including a first plate-shaped portion and a second member including a second plate-shaped portion. The first plate-shaped portion has a first through-hole. The second plate-shaped portion has a slit inside which the first through-hole is unobstructed while the first plate-shaped portion is received in the slit; and a locking portion protruding and fitting into the first through-hole.

### Advantageous Effects of Invention

In the present disclosure, the locking portion protrudes and fits into the first through-hole of the first plate-shaped portion that is received in the slit. Therefore, according to the present disclosure, a frame can be provided in which the first member is not easily detached from the second member.

### Brief Description of Drawings

FIG. 1 is a perspective view illustrating a component configuration of a frame according to Embodiment 1 of the present disclosure;
FIG. 2 is a cross-sectional view illustrating the frame according to Embodiment 1 of the present disclosure;
FIG. 3 is a plan view illustrating a positional relationship between a first and a second through-hole of a first member and a second member of the frame according to Embodiment 1 of the present disclosure;
FIG. 4 is a cross-sectional view illustrating a step of combining the second member with the first member in a method for manufacturing the frame according to Embodiment 1 of the present disclosure;
FIG. 5 is a perspective view illustrating a frame according to Embodiment 2 of the present disclosure;
FIG. 6 is a perspective view illustrating a first member of the frame according to Embodiment 2 of the present disclosure;
FIG. 7 is a perspective view illustrating a second member of the frame according to Embodiment 2 of the present disclosure;
FIG. 8 is a cross-sectional view taken along the line VIII - VIII in FIG. 5;
FIG. 9 is a front view illustrating an enlarged slit portion of the second member of the frame according to Embodiment 2 of the present disclosure;
FIG. 10 is a perspective view illustrating a step of combining the second member with the first member in a method for manufacturing the frame according to Embodiment 2 of the present disclosure;
FIG. 11 is a perspective view illustrating a frame according to Embodiment 3 of the present disclosure;
FIG. 12 is a perspective view illustrating a step of combining a second member with a first member of the frame in a method of manufacturing the frame according to Embodiment 3 of the present disclosure;
FIG. 13 is a front view illustrating an enlarged slit portion of the second member of the frame according to Embodiment 3 of the present disclosure;
FIG. 14 is a perspective view illustrating a frame according to Embodiment 4 of the present disclosure; and
FIG. 15 is a perspective view illustrating a step of combining a second member with a first member of the frame in a method for manufacturing the frame according to Embodiment 4 of the present disclosure.

### Description of Embodiments

Hereinafter, embodiments of the present disclosure are described in detail with reference to the drawings. Identical or equivalent parts are denoted by the same reference signs in the drawings.

In the orthogonal coordinate system XYZ illustrated in the drawings, an X axis direction is a direction along which a first member extends, a Z axis direction is a vertical direction, and a Y axis direction is a direction orthogonal to the X axis and the Z axis. Hereinafter, embodiments are described below as appropriate with reference to this coordinate system.

### Embodiment 1

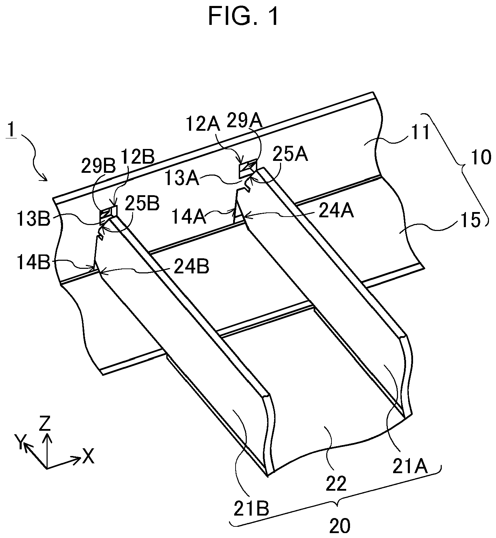

A frame according to Embodiment 1 is a T-shaped frame used for railway vehicles. The structure of the frame is described below with reference to FIGS. 1 through 4.

As illustrated in FIG. 1, a frame 1 includes a first member 10 extending in the X direction and a second member 20 whose tip, that is, a +Y end is assembled at an intermediate portion of the first member 10 in the X direction.

The first member 10 includes angle steel whose YZ cross-section having an L shape. The first member 10 includes a bottom portion 15 forming the bottom of the angle steel and a side wall 11 forming the side wall of the angle steel. The bottom portion 15 is plate-shaped and is arranged parallel to an XY plane. The side wall 11 is also plate-shaped, and the side wall 11 is arranged parallel to an XZ plane. For attachment of the +Y end of the second member 20, the side wall 11 has first through-holes 12A and 12B and the second through-holes 14A and 14B that are respectively separated by respective partitions 13A and 13B.

The first through-holes 12A and 12B and the second through-holes 14A and 14B are holes for engaging later mentioned hook-shaped portions 29A and 29B at the +Y ends of the second member 20. The +Y end of the second member 20 attaches by engaging the hook-shaped portions 29A and 29B with the first through-holes 12A and 12B and the second through-holes 14A and 14B. When the hook-shaped portions 29A and 29B are engaged, the first through-hole 12A and the second through-hole 14A are arranged in the Z direction in order to make a later-described side wall 21A of the second member 20 parallel to the Z direction. The first through-hole 12B and the second through-hole 14B are also arranged in the Z direction.

However, the second member 20 includes channel steel whose XZ cross-section has a U shape. The second member 20 includes the two side walls 21A and 21B forming side walls of the channel steel and a bottom portion 22 forming the bottom of the channel steel. The two side walls 21A and the bottom portion 22 are plate-shaped, the side wall 21A is parallel to the YZ plane, and the bottom portion 22 is parallel to the XY plane.

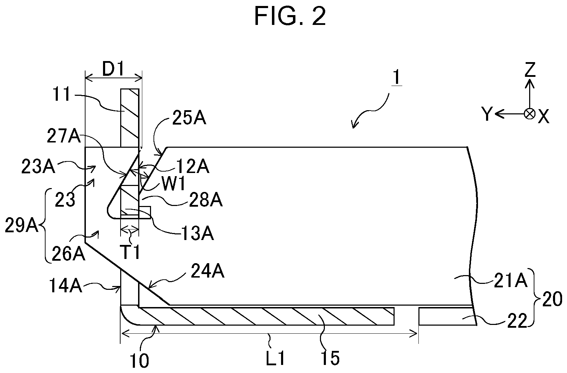

As illustrated in FIG. 2, the +Y end portion of the side wall 21A extends by a length L1 farther to the +Y side than the bottom portion 22 so as to prevent the bottom portion 22 from interfering with the bottom portion 15 of the first member 10. The length L1 is longer than the Y direction width of the bottom portion 15 of the first member 10.

Although not illustrated in FIG. 2, the +Y end portion of the side wall 21B also extends by the length L1 to the +Y side farther than the bottom portion 22.

A slit 25A through which the partition 13A of the first member 10 is inserted is formed at the +Y end portion of the side wall 21A and at the side end portion on the +Z side of the side wall 21A in order to assemble the second member 20 with the first member 10. The +Y end portion of the side wall 21A is formed in a shape having the hook-shaped portion 29A by the slit 25A dividing a portion of the +Y end portion of the side wall 21A.

The hook- shaped portion 29A is engaged with the first through-hole 12A and the second through-hole 14A of the side wall 11 in order to assemble together the side wall 21A and the side wall 11 of the first member 10. In detail, the hook-shaped portion 29A includes a hook base portion 26A extending to the +Y side, and the hook base portion 26A penetrates through the second through-hole 14A of the first member 10. The hook-shaped portion 29A includes a hook tip portion 23 extending from the hook base portion 26A to the -Y side and to the +Z side, and the hook tip portion 23 is inserted through the first through-hole 12A from the +Y side, and is engaged with the +Z side inner surface of the first through-hole 12A. Thus, the hook tip portion 23 functions as a locking portion 23A.

In the hook-shaped portion 29A, the -Y end portion of the locking portion 23A is chamfered in order to facilitate assembly. A corner portion between the -Z end portion and the +Y end portion of the hook base portion 26A is obliquely cut to form a chamfer portion 24A.

The slit 25A has a shape of a groove obliquely extending from the +Z side side-end portion of the side wall 21A towards the -Z side and towards the +Y end of the side wall 21A in order to form the +Y end of the side wall 21A into a hook shape. The slit 25A opens at a position separated from the +Y end of the hook-shaped portion 29A by a distance D1. Here, the distance D1 is greater than the thickness T1 of the first member 10 to stably engage the hook tip portion 23 with the +Z side inner surface of the first through-hole 12A. A width W1 of the slit 25A is greater than the thickness T1 of the first member 10.

On the back side of the slit 25A, that is, on the -Z end side, a slope of the inner surface extending towards the +Y side is gently formed and further extends to the -Y side. As a result, a convex portion 28A that protrudes towards the +Z side is formed at the -Z end of the slit 25A.

As described above, the partition 13A of the first member 10 is inserted through the slit 25A. As is described later, the partition 13A is inserted through the slit 25A in a state in which the second member 20 is tilted with respect to the first member 10, and the locking portion 23A and a locking portion 23B are inserted in the second through-holes 14A and 14B. Thereafter, the partition 13A is disposed in the slit 25A by making the second member 20 parallel to the first member 10. Therefore, the slit 25A obliquely extends with respect to the +Y surface and the -Y surface of the partition 13A. An inner surface portion 27A on the +Y side of the slit 25A abuts the corner portion between the +Y surface and the +Z surface of the partition 13A. Further, the inner surface portion 27A presses the partition 13A towards the -Y side and the -Z side. However, the convex portion 28A abuts the -Y surface of the partition 13A. Further, the convex portion 28A presses the partition 13A towards the +Y side. As a result, the inner surface portion 27A and the convex portion 28A sandwich the partition 13A to fix the partition 13A. Further, as described above, the locking portion 23A engages the +Z side inner surface of the first through-hole 12A. Therefore, the partition 13A is firmly fixed. As a result, the second member 20 is firmly attached to the first member 10.

Although not illustrated, the side wall 21B also has the similar configuration as the side wall 21A. Also in the side wall 21B, an inner surface portion 27B and a convex portion 28B sandwich the partition 13B to fix the partition 13B. Further, the locking portion 23B is engaged with the +Z side inner surface of the first through-hole 12B. As a result, the partition 13B is more firmly fixed.

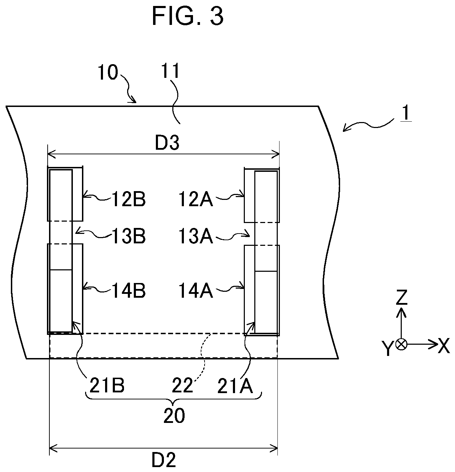

However, as illustrated in FIG. 3, in order to firmly assemble the second member 20 with the first member 10, at the tips of the side walls 21A and 21B, a distance D2 between the +X side wall surface of the side wall 21A and the -X side wall surface of the side wall 21B is equal to a distance D3 between (i) the +X side inner surface of the first through-hole 12A and the second through-hole 14A and (ii) the -X side inner surface of the first through-hole 12B and the second through-hole 14B. As a result, when the hook-shaped portion 29A of the side wall 21A and the hook-shaped portion 29B of the side wall 21B pass through the second through-hole 14A and further through the first through-hole 12A from the tip side, any shakiness of the hook-shaped portions 29A and 29B is prevented.

Next, a method of manufacturing the frame 1 is described. First, one each piece of angle steel and channel steel are prepared. Then, the first through-holes 12A and 12B and the second through-holes 14A and 14B are formed in the side wall of the angle steel of the dimensions illustrated in FIGS. 1 through 3 to manufacture the first member 10.

Meanwhile, the above-described length L1 of the channel steel of the tip side of the bottom portion 22 is removed, and the channel steel is shaped such that the tip portions of the side walls 21A and 21B protrude from the bottom portion 22. Also, chamfer portions 24A and 24B are formed at corner portions on the tip side and the bottom side of the side walls 21A and 21B of the channel steel. The chamfer portions 24A and 24B are formed of dimensions such that the bottom 22 side side-end portions of the side walls 21A and 21B do not interfere with the bottom portion 15 of the first member 10 when the locking portions 23A and 23B of the hook-shaped portions 29A and 29B described below are inserted into the second through-holes 14A and 14B of the first member 10.

Further, the slit 25A and a slit 25B and convex portions 28A and 28B are formed on the tip sides of the side walls 21A and 21B of the channel steel with the dimensions illustrated in FIGS. 1 through 3. As a result, the hook-shaped portions 29A and 29B are formed of the channel steel, and the second member 20 is manufactured.

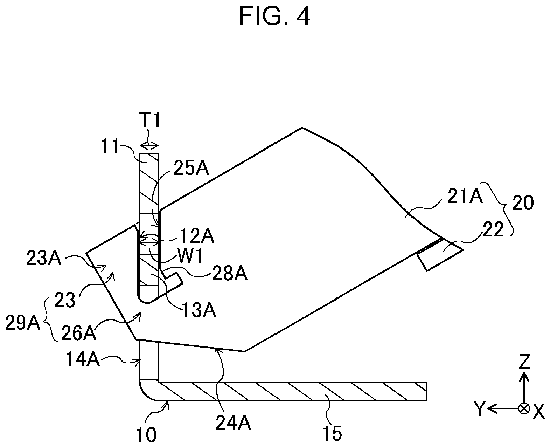

Subsequently, the second member 20 is attached to the first member 10. Specifically, the upper end surfaces of the side walls 21A and 21B of the second member 20 are firstly tilted with respect to the bottom portion 15 of the first member 10. Then, the hook-shaped portion 29A is inserted into the second through-holes 14A and 14B of the first member 10. Further, as illustrated in FIG. 4, the hook- shaped portion 29A is moved upward, that is, to the +Z side, and the partition 13A of the first member 10 is inserted into the rear surface side slit 25A of the hooked portion 29A. Although not illustrated, the partition 13B is also inserted into the slit 25B of the second member 20.

Further, the second member 20 is moved to the +Z side to position the partition 13A at the -Z side of the slit 25A, that is, at the back of the slit 25A. Then, the +Z side end surface of the side wall 21A of the second member 20 is made parallel to the bottom portion 15 of the first member 10, and the locking portion 23A of the hook-shaped portion 29A is pushed into the first through-hole 12A of the first member 10. As a result, the locking portion 23A engages the first through-hole 12A. Further, the convex portion 28A of the slit 25A is brought into contact with the partition 13A. Although not illustrated, by the above-described assembly, the partition 13B is also positioned at the back of the slit 25B. Then, with the upper end surface of the side wall 21A parallel to the bottom portion 15, the locking portion 23B is pushed into the first through-hole 12B.

Since the locking portions 23A and 23B are pushed into the first through-holes 12A and 12B, compressive forces are applied to the locking portions 23A and 23B and to the +Z side inner surfaces of the first through-holes 12A and 12B. As a result, the locking portions 23A and 23B and the +Z side inner surfaces of the first through-holes 12A and 12B are elastically deformed. Further, since the convex portion 28A of the slit 25A abuts against the partition 13A, compressive forces are applied to the +Y surface of the convex portion 28A and the -Y surface of the partition 13A. As a result, the +Y surface of the convex portion 28A and the -Y surface of the partition 13A are elastically deformed. As a result, the first member 10 and the second member 20 are firmly assembled together. Accordingly, the first member 10 and the second member 20 are assembled together with a high bonding strength. Through the above steps, the frame 1 is completed.

As described above, in the frame 1 according to Embodiment 1, the partitions 13A and 13B formed at the side wall 11 of the first member 10 are inserted in the slits 25A and 25B formed in the side walls 21A and 21B of the second member 20. Also, the first through-holes 12A and 12B formed in the side wall 11 of the first member 10 are engaged with the locking portions 23A and 23B of the hook-shaped portions 29A and 29B formed by providing the slits 25A and 25B in the side walls 21A and 21B of the second member 20. Therefore, the first member 10 and the second member 20 can be assembled with a high bonding strength. In addition, assembly together of the first member 10 and the second member 20 is easily performed by simply inserting the partitions 13A and 13B into the slits 25A and 25B and then simply engaging the first through-holes 12A and 12B by the locking portions 23A and 23Bthrough-hole.

In addition, only the side wall 11 of the first member 10 has the first through-holes 12A and 12B, and the bottom portion 15 does not have these. In other words, the first through-holes 12A and 12B are not formed across the bent portion of the first member 10 having an L-shaped cross-section. Therefore, the first through-holes 12A and 12B are not distorted by the bent portions. As a result, in the frame 1, the positional accuracy of the second member 20 with respect to the first member 10 can be increased.

In addition to the first through-holes 12A and 12B, the side wall 11 has the second through-holes 14A and 14B. Similarly to the first through-holes 12A and 12B, the second through-holes 14A and 14B are not distorted by the above-described bent portion, and as a result, in the frame 1, the positional accuracy of the second member 20 with respect to the first member 10 can be increased.

The convex portions 28A and 28B formed in the slits 25A and 25B abut the partitions 13A and 13B formed on the side wall 11 of the first member 10. Thereby, the first member 10 and the second member 20 are firmly assembled together. Therefore, in the frame 1, the bonding strength between the first member 10 and the second member 20 is high. As a result, detachment of the second member 20 from the first member 10 can be prevented.

The locking portions 23A and 23B include the +Z end portion of the hook-shaped portion 29A of the side walls 21A and 21B and fit into the +Z side inner surface of the first through-hole 12A. When the side walls 21A and 21B are moved downward by the weight thereof or by a force from the +Z side, that is, by a downward force, the locking portions 23A and 23B fit into the first through-hole 12A more strongly. Therefore, in the frame 1, the second member 20 is difficult to detach from the first member 10.

### Embodiment 2

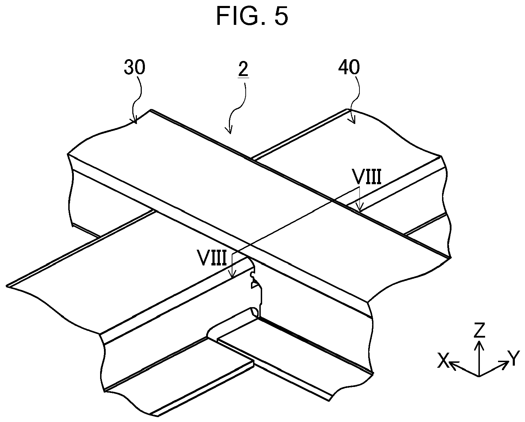

A frame 2 according to Embodiment 2 is a cross-shaped frame. Hereinafter, the configuration of the frame 2 according to Embodiment 2 is described with reference to FIGS. 5 to 10. In Embodiment 2, a configuration different from Embodiment 1 is described.

As illustrated in FIG. 5, the frame 2 is assembled with a first member 30 extending in the X direction, and a second member 40 that is assembled with the first member 30 at an intermediate portion in the X direction, extends in the Y direction, and intersects the first member 30.

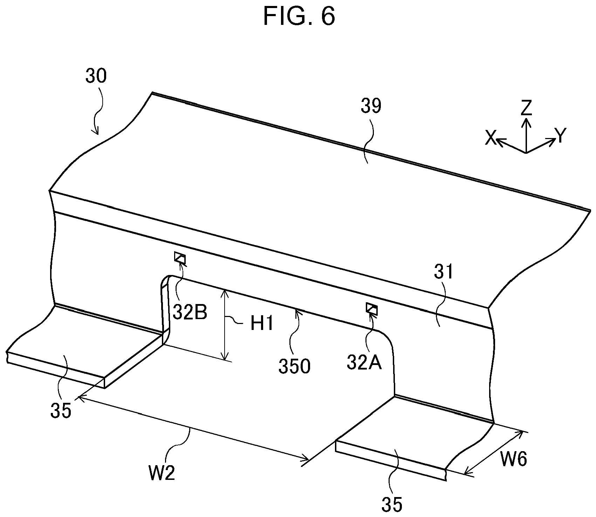

The first member 30 includes hat-shaped steel having a YZ cross-section formed into a hat shape. As illustrated in FIG. 6, the first member 30 includes an upper surface portion 39 that is referred to as a hat-shaped steel web and parallel to the XY plane, a side wall 31 that is referred to as a hat-shaped steel flange and parallel to the XZ plane, and a bottom portion 35 that is referred to as a hat-shaped steel arm and parallel to the XY plane. A notch 350 and first through-holes 32A and 32B are formed in the first member 30. The notch 350 is formed by cutting out the bottom portion 35 and a side wall 31 up to the middle of the side wall 31 in the Z direction, and the first through-holes 32A and 32B are formed in the side wall 31 and located on +Z side of the notch 350.

Although not illustrated, the first member 30 includes another side wall parallel to the XZ plane arranged at the +Y end of the upper surface portion 39, and another bottom portion that is parallel to the XY plane and extends in the +Y direction from the another side wall. Further, another notch having a similar shape is also formed in another side wall and bottom portion that are not illustrated. Two first through-holes are also formed in another side wall that is not illustrated.

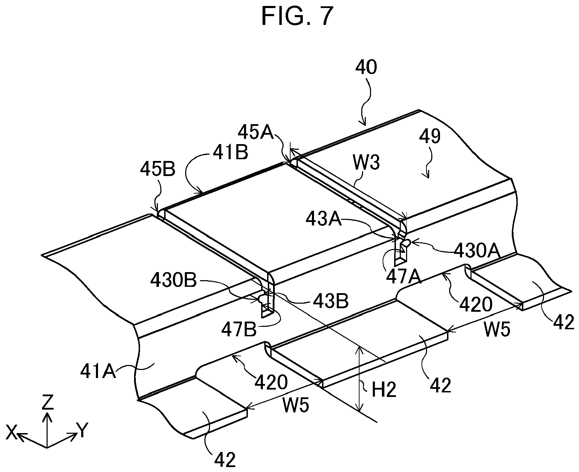

The notch 350 is formed to fit the second member 40 when the first member 30 is assembled with the second member 40. Therefore, a width W2 of the notch 350 in the X direction is equal to a width W3 of an upper surface portion 49, which is described later, of the second member 40 in the X direction illustrated in FIG. 7. A height H1 of the notch 350 in the Z direction illustrated in FIG. 6 is smaller than a height H2 of the second member 40 in the Z direction illustrated in FIG. 7. Because a portion of the side wall 31 positioned on the +Z side of the notch 350 is fitted into slits 45A and 45B, which is described later, of the second member 40.

However, although not illustrated, in the case where the second member 40 is fitted into the notch 350 and the side wall 31 is fitted into the slits 45A and 45B of the second member 40, the first through-holes 32A and 32B are formed at overlapped positions with later-described locking portions 43A and 43B in the slits 45A and 45B as viewed in the Y direction. In addition, the first through-holes 32A and 32B are formed in a rectangular shape smaller than the locking portions 43A and 43B viewed in the Y direction. The first through-holes 32A and 32B penetrate the side wall 31. Thus when the side wall 31 is fitted into the slits 45A and 45B of the second member 40, the locking portions 43A and 43B in the slits 45A and 45B engage the first through-holes 32A and 32B.

The second member 40 includes hat-shaped steel whose XZ cross-section is formed into a hat shape. As illustrated in FIG. 7, second member 40 includes an upper surface portion 49 that is referred to as a web and that is parallel to the XY plane, side walls 41A and 41B that are referred to as a flange and are parallel to the YZ plane, and a bottom portion 42 that is referred to as an arm and that is parallel to the XY plane. In the second member 40, two notches 420 formed by cutting out the bottom portion 42 and the slits 45A and 45B are formed that cross the upper surface portion 49 in the X direction, penetrate the upper surface portion 49 in the Z direction, and further extend from the upper surface portion 49 to the middle of the side walls 41A and 41B in the Z direction.

Although not illustrated, the second member 40 includes another bottom portion extending in the +X direction from the side wall 41B. Two notches having shapes similar to the notch 420 are also formed in the another bottom portion.

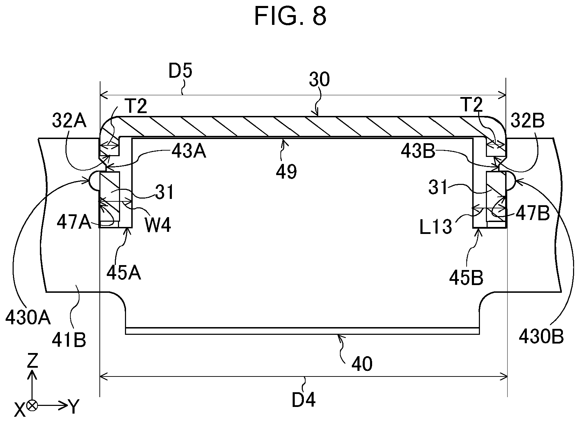

As described above, the slits 45A and 45B are structures in which the side wall 31 of the first member 30 is fitted when the first member 30 is assembled together with the second member 40. As illustrated in FIG. 8, a width W4 of the slits 45A and 45B in the Y direction is slightly greater than the thickness T2 of the side wall 31 in order to facilitate fitting of the side wall 31. However, in the slits 45A and 45B, a distance D4 from a -Y side inner surface portion 47A of the slit 45A to a +Y side inner surface portion 47B of the slit 45B is equal to a distance D5 between the outer wall surfaces of the two side walls 31 of the first member 30 to be in a state in which the fitted side wall 31 is not shaky. In order to prevent shakiness of the side wall 31 and detachment from the slits 45A and 45B, the locking portion 43A is formed on the inner surface portion 47A of the slit 45A. Furthermore, the locking portion 43B is formed on the inner surface portion 47B of the slit 45B.

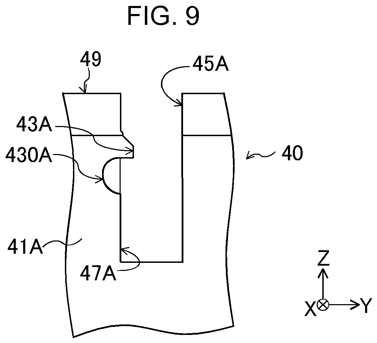

As illustrated in FIGS. 8 and 9, the locking portion 43A is formed in a convex shape protruding from the inner surface portion 47A of the slit 45A on the -Y side towards the +Y side. The locking portion 43A is formed in a rectangular shape viewed on the XZ plane, and a size thereof is smaller than the rectangular shape of the first through-hole 32A of the side wall 31 viewed on the XZ plane. As illustrated in FIGS. 8, in a state in which the first member 30 is assembled together with the second member 40, the locking portion 43A protrudes into the first through-hole 32A of the side wall 31, and the -Z surface of the locking portion 43A abuts the -Z side inner surface portion of the first through-hole 32A. However, the locking portion 43B is formed in a convex shape protruding from the +Y side inner surface portion of the slit 45B to the -Y side. The shape of the locking portion 43B viewed on the XZ plane is similar to the shape of the locking portion 43A viewed on the XZ plane, and the size thereof is also similar. In a state where the first member 30 is assembled with the second member 40, the locking portion 43B protrudes into the first through-hole 32B of the side wall 31, and the -Z surface of the locking portion 43B abuts the -Z side inner surface portion 47B of the through-hole 32B. As a result, the locking portions 43A and 43B engage the -Z side inner surface portions of the first through-holes 32A and 32B, and sandwich the two side walls 31 of the first member 30 to firmly assemble together the first member 30 with the second member 40.

On the -Z side of the locking portions 43A and 43B, concave portions 430A and 430B that are adjacent to the locking portions 43A and 43B in the Z direction are formed. The concave portion 430A is recessed towards the -Y side and the concave portion 430B is recessed towards the +Y side. As a result, the concave portions 430A and 430B facilitate elastic deformation of the locking portions 43A and 43B when a force in the Z direction is applied to the locking portions 43A and 43B. As is described later, when assembling together the first member 30 with the second member 40, the side wall 31 of the first member 30 is pushed into the slits 45A and 45B. At this time, a force in the -Z direction is applied to the locking portions 43A and 43B from the side wall 31. Then, the concave portions 430A and 430B facilitate elastic deformation of the locking portions 43A and 43B. The elastic deformation of the locking portions 43A and 43B enables the locking portions 43A and 43B easily to engage with the first through-holes 32A and 32B, and further, enables the locking portions 43A and 43B to firmly engage with the first through-holes 32A and 32B.

Returning to FIG. 7, the notch 420 is formed to prevent the bottom portion 35 of the first member 30 from interfering with the bottom 42 of the second member 40 when the first member 30 is assembled with the second member 40. Therefore, a Y direction width W5 of the notch 420 is equal to a Y direction width W6 of the bottom portion 35 of the first member 30 illustrated in FIG. 6.

To more reliably prevent the interference of the bottom portion 35, the notch 420 is formed in a shape in which the -Z end portion of the side wall 41A continuous to the bottom portion 42 is also cut out in addition to the bottom portion 42 of the second member 40.

Next, a method of manufacturing the frame 2 according to Embodiment 2 is described. Firstly, two pieces of hat-shaped steel are prepared. A portion of the bottom of one of the hat-shaped steel pieces is removed to form the notch 350 having the shape and size illustrated in FIG. 6. In addition, the above-described first through-holes 32A and 32B are formed in a portion of the side wall 31 to the +Z side of the notch 350. In the formation of the first through-holes 32A and 32B, drilling is performed from one side wall 31 to another side wall 31 in order to maintain positional accuracy. Thereby, the first through-holes 32A and 32B can be formed in each of the two side walls 31 by a single drilling process. Thereby, the first member 30 is manufactured.

However, the second member 40 is manufactured by forming the notches 420, the slits 45A and 45B and the locking portions 43A and 43B having the shapes and dimensions illustrated in FIGS. 7 to 9 in the another hat-shaped steel. Here, the slits 45A and 45B are formed by cutting linear grooves extending in the -Z direction from the upper surface portion 49 of the second member 40.

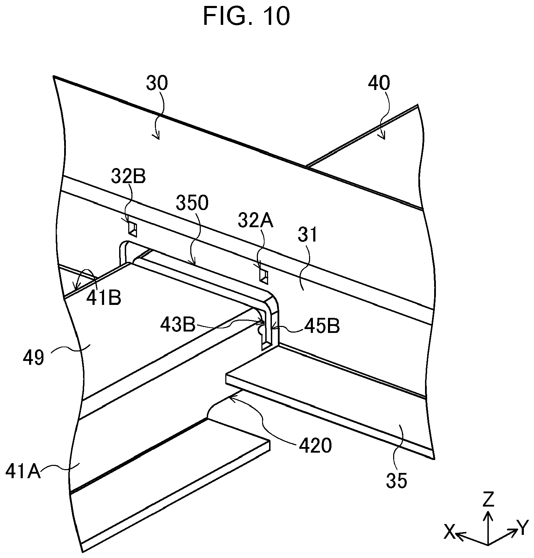

As illustrated in FIG. 10, the first member 30 crosses the +Z side of the manufactured second member 40 in a cross shape. Then, the bottom portion 35 of the first member 30 is positioned on the +Z side of the notch 420 of the second member 40. Further, the notch 350 of the first member 30 is positioned on the +Z side of the upper surface portion 49 and the side walls 41A and 41B of the second member 40. Then, a portion of the side wall 31 located on the +Z side of the notch 350 is pushed into the slits 45A and 45B of the second member 40.

Although not illustrated, when a portion of the side wall 31 is pushed into the slits 45A and 45B, the locking portions 43A and 43B formed in the slits 45A and 45B are pushed by the side wall 31 to elastically deform. Subsequently, when a portion of the side wall 31 is further pushed into the slits 45A and 45B, the first through-holes 32A and 32B of the side wall 31 are moved in the -Z direction, and as a result, the locking portions 43A and 43B are positioned in the inside of the first through-holes 32A and 32B. Then, the locking portions 43A and 43B return to their original shapes to lock the first through-holes 32A and 32B. Thus, the side wall 31 of the first member 30 is fixed to the side walls 41A and 41B of the second member 40. Through the above steps, the frame 2 is completed.

As described above, in the frame 2 according to Embodiment 2, the side wall 31 of the first member 30 is inserted into the slits 45A and 45B of the second member 40 and the locking portions 43A and 43B engage the first through-holes 32A and 32B of the first member 30 in the slits 45A and 45B. Therefore, in the frame 2, the first member 30 and the second member 40 can be assembled together with a high bonding strength.

In Embodiment 2, the locking portions 43A and 43B protrude in the Y direction from the inner surface portions 47A and 47B of the slits 45A and 45B. Therefore, even when a force for moving the first member 30 in the Z direction is applied, due to the locking portions 43A and 43B, the first member 30 is hardly detachable from the second member 40. The first member 30 is not detached from the second member 40 unless a force to elastically deform the locking portions 43A and 43B is applied.

The first through-holes 32A and 32B are formed only in the side wall 31 of the first member 30 and are not formed in the bottom portion 35. Therefore, as in Embodiment 1, positional accuracy of the second member 40 with respect to the first member 30 can be increased.

The slits 45A and 45B are parallel to the XZ direction and extend in the -Z direction from the upper surface portion 49 of the second member 40. Therefore, the side wall 31 of the first member 30 can be easily pushed into the slits 45A and 45B of the second member 40. According to Embodiment 2, assembling the frame 2 is easy.

The slits 45A and 45B are also formed in the upper surface portion 49 in addition to the side walls 41A and 41B of the second member 40. The first member 30 and the second member 40 are joined by insertion of the side wall 31 of the first member 30 into the slits 45A and 45B. Therefore, the area where the first member 30 and the second member 40 are joined is wide. As a result, the strength of the frame 2 is enhanced.

### Embodiment 3

In the frame 2 according to Embodiment 2, the first member 30 is connected from the +Z side of the second member 40, that is, from above. However, in the present disclosure, on the contrary, the second member 40 may be connected from the top of a first member 30.

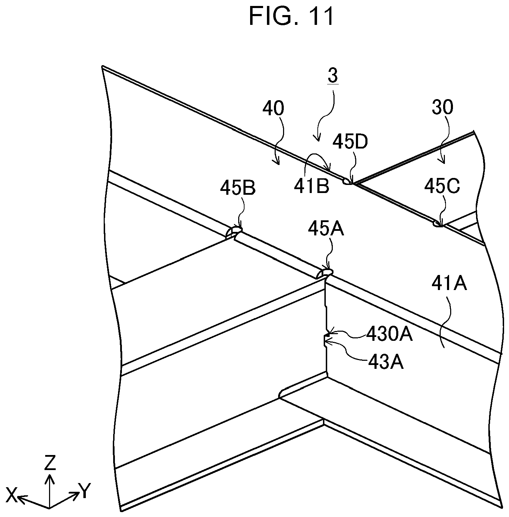

In a frame 3 according to Embodiment 3, the second member 40 is connected from the top of the first member 30, and the second member 40 and the first member 30 are assembled together in a cross shape. Hereinafter, a configuration of the frame 3 according to Embodiment 3 is described with reference to FIGS. 11 to 13. In the description of Embodiment 3, a configuration different from those of Embodiment 1 and Embodiment 2 is described.

As illustrated in FIG. 11, the frame 3 according to Embodiment 3 includes the first member 30 extending in the Y direction, and the second member 40, that is assembled with the second member 30 at an intermediate portion of the first member 30 in the Y direction, extends in the X direction and intersects with the member 30. The first member 30 and the second member 40 include pieces of the hat-shaped steel similar to Embodiment 2. Therefore, similarly to Embodiment 2, the first member 30 includes an upper surface portion 36, a side wall 31 and a bottom portion 35. Again similarly to Embodiment 2, the second member 40 includes an upper surface portion 49, side walls 41A and 41B, and a bottom portion 42 as in Embodiment 2.

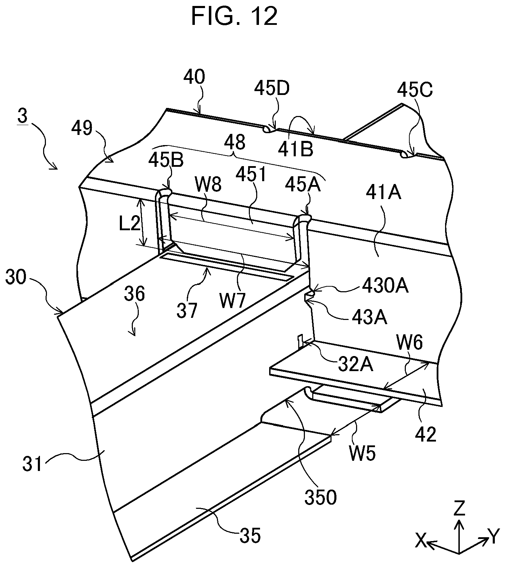

As illustrated in FIG. 12, a notch 350 and a first through-hole 32A are formed in the side wall 31 of the first member 30. An upper surface slit 37 is formed in the upper surface portion 36. Although not illustrated, the first member 30 is provided with another side wall at the +X end of the upper surface portion 36, and a notch and a first through-hole are formed also in the another side wall. Since the notch and the first through-hole of the another side wall have configurations similar to the notch 350 and the first through-hole 32A described below, the description thereof is omitted.

The notch 350 is formed to fit the bottom portion 42 of the second member 40 to the bottom portion 35 of the first member 30 when assembling together the second member 40 with the first member 30. Therefore, the -Z end of the side wall 31 of the first member 30 and the bottom portion 35 continuous from the -Z end thereof are cut out to form the notch 350. The width W5 of the notch 350 in the Y direction is equal to the Y direction width W6 of the bottom portion 42 of the second member 40.

The first through-hole 32A is formed in the +Y side inner surface portion of the notch 350 on a +Z direction extension line. In addition, the first through-hole 32A is formed on the +Z side of the notch 350. The position of the first through-hole 32A corresponds to a position of a later-described locking portion 43A of the second member 40 when the bottom portion 42 of the second member 40 is fitted in the notch 350. The shape and size of the first through-hole 32A are similar to those in Embodiment 2.

However, the upper surface slit 37 is a structure in which a reinforcement portion 451, that is described later, of the second member 40 is fitted when the second member 40 is assembled together with the first member 30. Therefore, the upper surface slit 37 is formed in a shape and direction similar to the rectangular shape of the reinforcement portion 451 viewed in the Z direction. The upper surface slit 37 is formed at a position overlapping in the Z direction when the second member 40 is assembled together with the first member 30.

However, a notch 48 is formed for fitting the first member 30 in the side wall 41A of the second member 40 when the second member 40 is assembled together with the first member 30.

An X direction width W7 of the notch 48 is formed to be equal to the X direction width of the upper surface portion 36 of the first member 30. The notch 48 extends in the -Z direction from the +Z end side of the side wall 41A while maintaining this width. Further, the notch 48 is cut off from the +Z end side of the side wall 41A to the -Z end of the side wall 41A and to the bottom portion 42.

The plate-shaped reinforcement portion 451 extending in the -Z direction from the -Y end of the upper surface portion 49 is provided at an X direction center of the notch 48. A slit 45A is formed between the -X side inner surface portion of the notch 48 and the -X end surface of the reinforcement portion 451. A slit 45B is formed between the +X side inner surface portion of the notch 48 and the +X end surface of the reinforcement portion 451.

The reinforcement portion 451 is a portion reinforcing the joint between the first member 30 and the second member 40 by fitting into the above-described upper surface slit 37. The reinforcement portion 451 has a rectangular XY cross-section. The reinforcement portion 451 extends in the Z direction while maintaining the cross-sectional shape thereof. A corner portion of the reinforcement portion 451 at the -Z end is chamfered to facilitate fitting into the upper surface slit 37. A Z direction length L2 of the reinforcement portion 451 is formed to be greater than the thickness of the plate of the upper surface portion 36 of the first member 30 in order to stabilize fitting into the upper surface slit 37. An X direction width W8 of the reinforcement portion 451 is smaller than the X direction width W7 of the notch 48, and thus the above-described slits 45A and 45B are formed between the reinforcement portion 451 and the notch 48.

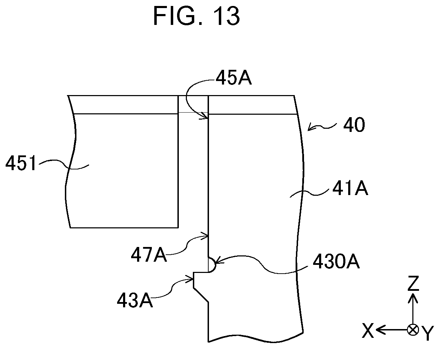

The slits 45A and 45B extend in the -Z direction from the upper surface portion 49 of the second member 40. As illustrated in FIG. 13, the locking portion 43A and the concave portion 430A described in Embodiment 2 are formed in an inner surface portion 47A of the slit 45A. In the frame 2 of Embodiment 2, the first member 30 is attached from the +Z side of the second member 40. However, in the frame 3 of Embodiment 3, contrary to Embodiment 2, the second member 40 is attached from the +Z side of the member 30. Therefore, the shape of the locking portion 43A of Embodiment 3 is a shape opposite to the locking portion 43A of Embodiment 2 in the Z direction, that is, the shapes are symmetrical relative to each other with respect to the XY plane. The concave portion 430A is adjacent to the +Z side of the locking portion 43A, contrary to Embodiment 2. As a result, when assembling the second member 40 from the +Z side of the first member 30, when the locking portion 43A is pushed against the side wall 31 of the first member 30, the locking portion 43A is easily elastically deformed. In the second member 40, the locking portion 43A can be engaged with the first through-hole 32A of the first member 30 by elastically deforming the locking portion 43A. Thereby, the second member 40 is firmly assembled together with the first member 30.

Although not illustrated, a locking portion and a concave portion having a similar shape and size as the locking portion 43A and the concave portion 430A are also formed in the inner surface portion of the slit 45B. In addition, although not illustrated, similarly to the side wall 41A, a notch and a reinforcement portion are also formed in the side wall 41B of the second member 40. Although only a portion is illustrated in FIG. 12, slits 45C and 45D are formed in the side wall 41B, and a locking portion and a concave portion having the same shape and size as the locking portion 43A and the concave portion 430A, are also formed in the slits 45C and 45D.

Next, a method of manufacturing the frame 3 according to Embodiment 3 is described. Two pieces of hat-shaped steel are prepared, and the notch 350, the first through-hole 32A, and the upper-surface slit 37 having the shape and dimensions illustrated in FIG. 12 are formed in one piece of hat-shaped steel to prepare the first member 30. Also, the other hat-shaped steel is formed with the locking portion 43A, the concave portion 430 A, the slits 45A, 45B, 45C, and 45D having the shape and dimensions illustrated in FIGS. 12 and 13. Subsequently, between the slits 45A and 45B, and between the slits 45C and 45D are cut out to form the reinforcement portion 451. Thereby, the second member 40 is manufactured.

Next, as illustrated in FIG. 12, the second member 40 is disposed on the +Z side of the first member 30, and furthermore, the second member 40 intersects the first member 30 in a cross shape. Then, the second member 40 is disposed to be in a state in which the first member 30 is positioned between the slits 45A and 45B and between the slits 45C and 45D of the second member 40, and the reinforcement portion 451 of the second member 40 is positioned above the upper surface slit 37 of the first member 30.

Subsequently, in this state, the reinforcement portion 451 of the second member 40 is pushed into the upper surface slit 37 of the first member 30. When the reinforcement portion 451 is pushed into the upper surface slit 37, the locking portion 43A of the slit 45A is elastically deformed by being pushed by the side wall 31 of the first member 30. The locking portions of the slits 45B, 45C, and 45D (not illustrated) are similarly elastically deformed. Further, when the reinforcement portion 451 is pushed into the upper surface slit 37, the locking portion 43A reaches the first through-hole 32A of the side wall 31 and the locking portion 43A is engaged with the first through-hole 32A. The locking portions of the slits 45B, 45C, and 45D also engage with the first through-hole of the side wall 31. Thus, the second member 40 is assembled together with the first member 30, and further the second member 40 is fixed to the first member 30. Through the above steps, the frame 3 is completed.

As described above, in the frame 3 according to Embodiment 3, the locking portions 43A of the side walls 41A and 41B of the second member 40 engage the first through-holes 32A of the side wall 31 of the first member 30. Thus, the side walls 41A and 41B of the second member 40 are firmly assembled together with the side wall 31 of the first member 30. Therefore, in the frame 3 as in Embodiment 2, the first member 30 and the second member 40 are assembled together with a high bonding strength.

The locking portions 43A and 43B protrude in the Y direction from the inner surface portions 47A and 47B of the slits 45A and 45B. Therefore, as in Embodiment 2, in the frame 3, the first member 30 and the second member 40 are difficult to detach from each other.

Since the first through-holes 32A and 32B are formed only in the side wall 31 of the first member 30 and are not formed in the bottom portion 35, in the frame 3, the position accuracy of the second member 40 with respect to the first member 30 can be increased.

In the frame 3, since the reinforcement portion 451 is fitted in the upper surface slit 37 of the first member 30, an area of a joint portion of the first member 30 and the second member 40 is large. As a result, the strength of the frame 3 is high.

### Embodiment 4

In the frame 3 according to Embodiment 3, the upper surface slit 37 is formed in the first member 30, and the reinforcement portion 451 is formed in the second member 40. Then, the second member 40 is assembled from the top of the first member 30, and the reinforcement portion 451 fits in the upper surface slit 37. However, in the present disclosure, when a first member 30 is formed with an upper surface slit 37 and a second member 40 is formed with a reinforcement portion 451, the first member 30 may be assembled from the top of the second member 40 and the upper surface slit 37 may fit in the reinforcement portion 451.

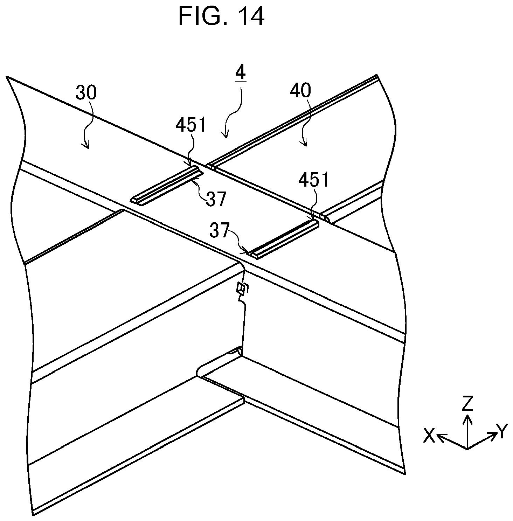

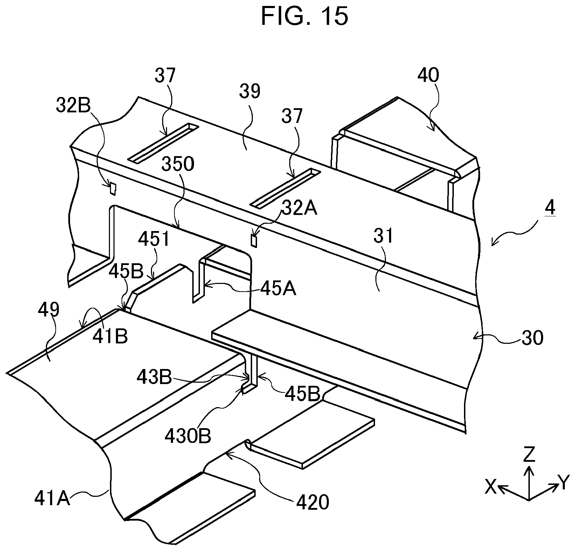

A frame 4 according to Embodiment 4 is a frame in which the upper surface slit 37 is formed in the first member 30 included in the frame 2 of Embodiment 2 and the reinforcement portion 451 is formed on the second member 40 included in the frame 2 of Embodiment 2. Hereinafter, a configuration of a frame 4 according to Embodiment 4 is described with reference to FIGS. 14 and 15. In Embodiment 4, a configuration different from those of Embodiment 1 through Embodiment 3 is described.

As illustrated in FIG. 14, the first member 30 is attached to the second member 40 by fitting the upper surface slit 37 onto the reinforcement portion 451 from the +Z side in the frame 4.

As illustrated in FIG. 15, two upper surface slits 37 are formed in an upper surface portion 39 of the first member 30. Each of the upper surface slits 37 is formed in a rectangular shape in which the longitudinal direction is the Y direction and the transverse direction is the X direction. The length in the longitudinal direction of the upper surface slit 37 is equal to the length in the longitudinal direction of the reinforcement portion 451 viewed in the Z direction and the length in the transverse direction of the upper surface slit 37 is slightly greater than the length in the transverse direction of the reinforcement portion 451 viewed in the Z direction. Then the upper surface slit 37, while maintaining the shape thereof, passes through the upper surface portion 39.

However, the reinforcement portion 451 is formed on each of side walls 41A and 41B. Specifically, the reinforcement portion 451 is formed by cutting and removing the upper surface portion 49 between the slits 45A and 45B described in Embodiment 2. Therefore, the reinforcement portion 451 is plate-shaped similarly to the side walls 41A and 41B. Further, the thickness of the reinforcement portion 451 is equal to the thickness of the side walls 41A and 41B. The +Z end of the reinforcement portion 451 is chamfered in order to facilitate fitting into the upper surface slit 37. Then, as illustrated in FIG. 14, the reinforcement portion 451 is fitted into the upper surface slit 37. As a result, as described above, the first member 30 is assembled together with the second member 40.

Next, a method of manufacturing the frame 4 according to Embodiment 4 is described. In the same manner as in Embodiment 2, a notch 350 and first through-holes 32A and 32B are formed in a hat-shaped steel member. Further, the upper surface slit 37 is formed by cutting to manufacture the first member 30.

Further, similarly to Embodiment 2, notches 420 and the slits 45A and 45B are formed in another hat-shaped steel member. An opening portion in the upper surface portion of the hat-shaped steel member is provided by removing an area surrounded by:
(i) the slit 45A of the side wall 41A and the slit 45A of the side wall 41B; and
(ii) the slit 45B of the side wall 41A and the slit 45B of the side wall 41B. Thereby, the second member 40 on which the reinforcement portion 451 is formed is manufactured.

Next, the first member 30 is laid upon the fabricated second member 40 to form a cross shape. Then, the locking portions 43A and 43B engage the first through-holes 32A and 32B by pushing a side wall 31 on top of the notch 350 of the first member 30 into the slits 45A and 45B of the second member 40. Then, the upper surface slit 37 of the first member 30 is fitted onto the reinforcement portion 451 of the second member 40. Through the above steps, the frame 4 is completed.

The reinforcement portion 451 of the second member 40 is preferably brought into contact with the inner surface portion of the two upper surface slits 37 of the first member 30. Such configuration increases the bonding strength of the frame 4.

As described above, in the frame 4 according to Embodiment 4, the upper surface slit 37 is formed in the first member 30, and the reinforcement portion 451 is formed in the second member 40. The reinforcement portion 451 is inserted in the upper surface slit 37. Therefore, as in Embodiment 3, the area of the joint portion of the first member 30 and the second member 40 is large. As a result, the strength of the frame 4 is high.

Although embodiments of the present disclosure have been described above, the present disclosure is not limited to the above-described embodiments. In Embodiment 1 through Embodiment 4, the first members 10 and 30 and the second members 20 and 40 are formed of angle steel, channel steel and hat-shaped steel. However, the present disclosure is not limited to these. In the present disclosure, inclusion of the first plate-shaped portion by the first members 10 and 30 together with inclusion of the second plate-shaped portion by the second members 20 and 40 are sufficient. Accordingly, the first members 10 and 30 and the second members 20 and 40 may be formed of flat plates, or further, the first members 10 and 30 and the second members 20 and 40 may be plates bent in an "I" shape or Z shape. Note that the side walls 11 and 31 of embodiments 1 through 4 correspond to the first plate-shaped portion of the present disclosure. Further, the side walls 21A, 21B, 41A, 41B correspond to the second plate-shaped portion of the present disclosure.

In Embodiments 1 through 4, the first members 10 and 30 and the second members 20 and 40 are formed of steel materials. However, in the present disclosure, materials of the first members 10 and 30 and the second members 20 and 40 are selected as desired. Accordingly, at least one of the first members 10 and 30 and the second members 20 and 40 may be made of a metal material, a resin material, or the like other than a steel material, for example, aluminum alloy or synthetic resin.

In Embodiments 1 through 4, the first through-holes 12A, 12B, 32A, and 32B are formed in the side walls 11 and 31 of the first members 10 and 30. In addition, the slits 25A, 25B, 45A, 45B, 45C, and 45D are formed in the side walls 21A, 21B, 41A, and 41B of the second members 20 and 40. However, the present disclosure is not limited such configuration. In the present disclosure, forming the first through-holes 12A, 12B, 32A, and 32B in the first plate-shaped portions of the first members 10 and 30, together with forming the slits 25A, 25B, 45A, 45B, and 45C, and 45D in the second plate-shaped portions of the second members 20 and 40, are sufficient. Therefore, the first through-holes 12A, 12B, 32A, and 32B may be formed in the plate-shaped portion other than the side walls 11 and 31, for example, the bottom portion 15. In this case, the side walls 21A, 21B, 41A, and 41B of the second members 20 and 40 are assembled together with the bottom portion 15. Similarly, the slits 25A, 25B, 45A, 45B, 45C, and 45D may be formed in plate-shaped portions other than the side walls 21A, 21B, 41A, and 41B.

In Embodiments 1 to 4, the frames 1 through 4 are T-shaped or cross-shaped. However, the present disclosure is not limited to such shapes. In the present disclosure, inclusion of the first members 10 and 30 and the second members 20 and 40 in the frames 1 to 4 is sufficient, and the overall shapes of the frames 1 to 4 are freely selected. The frames 1 to 4 may have, for example, an L shape or an "I" shape.

In Embodiments 1 through 4, the frames 1 to 4 are used for railroad vehicles, but the present disclosure is applicable to general machine frames.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2016-095602 filed on May 11, 2016, the entire disclosure of which is incorporated by reference herein.

### Reference Signs List

- 1, 2, 3, 4: Frame
- 10: First member
- 11: Side wall
- 12A, 12B: First through-hole
- 13A, 13B: Partition
- 14A, 14B: Second through-hole
- 15: Bottom portion
- 16: Upper surface portion
- 20: Second member
- 21A, 21B: Side wall
- 22: Bottom portion
- 23: Hook tip portion
- 23A, 23B: Locking portion
- 24A, 24B: Chamfer portion
- 25A, 25B: Slit
- 26A, 26B: Hook base portion
- 27A, 27B: Inner surface portion
- 28A, 28B: Convex portion
- 29A, 29B: Hook-shaped portion
- 30: First member
- 31: Side wall
- 32A, 32B: First through-hole
- 35: Bottom portion
- 36: Upper surface portion
- 37: Upper surface slit
- 39: Upper surface portion
- 40: Second member
- 41A, 41B: Side wall
- 42: Bottom portion
- 43A, 43B: Locking portion
- 45A, 45B, 45C, 45D: Slit
- 47A, 47B: Inner surface portion
- 48: Notch
- 49: Upper surface portion
- 350: Notch
- 420: Notch
- 430A, 430B: Concave portion
- 451: Reinforcement portion
- L1, L2: Length
- D1, D2, D3, D4, D5: Distance
- L3: Depth
- L4, W1, W2, W3, W4, W5, W6, W7: Width
- T1, T2: Thickness
- HI, H2: Height

## Claims

1. A frame comprising:
a first member including a first plate-shaped portion having a first through-hole; and
a second member including a second plate-shaped portion having:
a slit inside which the first through-hole is unobstructed while the first plate-shaped portion is received in the slit; and
a locking portion protruding and fitting into the first through-hole.

2. The frame according to claim 1, wherein
the slit has a shape of a groove obliquely extending from a side end portion of the second plate-shaped portion towards a tip portion of the second plate-shaped portion,
the second plate-shaped portion has a hook shape by the slit dividing a portion of the second plate-shaped portion, and
the locking portion is a hook tip portion of the second plate-shaped portion having the hook shape.

3. The frame according to claim 2, wherein
the first member further has a second through-hole and comprises a partition separating the first through-hole from the second through-hole,
the partition is disposed in the slit,
the hook tip portion is inserted in the first through-hole, and
a hook base portion of the second plate-shaped portion having the hook shape is inserted in the second through-hole.

4. The frame according to any one of claims 1 to 3, wherein the first plate-shaped portion is fixed to the second plate-shaped portion by abutting against an inner surface portion of the slit.

5. The frame according to any one of claims 1 to 4, wherein
the first plate-shaped portion further has another first through-hole,
the second member has a folded U-shaped cross-section,
the second plate-shaped portion comprises two side walls to form the U-shaped cross-section,
the slit and the locking portion are located at each tip portion of the two side walls, and
the respective locking portions are fit into the two first through-holes.

6. The frame according to any one of claims 1 to 4, wherein
the second member has a folded hat-shaped cross-section,
the second plate-shaped portion comprises two side walls to form the hat-shaped cross-section, and
the slit extends from an upper surface portion of the hat-shaped cross-section to the two side walls.

7. The frame according to claim 1, wherein the locking portion includes a convex portion protruding from the inner surface portion of the slit.

8. A frame assembling method of assembling a frame comprising a first member including a first plate-shaped portion having a first through-hole, and a second member including a second plate-shaped portion having a slit and a locking portion, the method comprising the steps of:
receiving the first plate-shaped portion in the slit, and
moving the first plate-shaped portion with respect to the slit, positioning so that (i) the first through-hole is unobstructed while the first through-hole is inside the slit and (ii) the locking portion protrudes into the first through-hole, and fitting the locking portion into the first through-hole.
